(19) Europäisches Patentamt

European Patent Office

Office européen des brevets

(11) EP 1 736 405 A1

(12) **EUROPEAN PATENT APPLICATION**

(43) Date of publication:
27.12.2006 Bulletin 2006/52

(51) Int Cl.:
*B64B 1/70* (2006.01)    *B64B 1/38* (2006.01)

(21) Application number: 05013400.6

(22) Date of filing: 22.06.2005

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(71) Applicants:
• Makarov, Vladimir
664009 Irkutsk City (RU)
• Demin, Konstantin
115487 Moscow (RU)

(72) Inventors:
• Makarov, Vladimir
664009 Irkutsk City (RU)
• Demin, Konstantin
115487 Moscow (RU)

(74) Representative: Balsters, Robert et al
Novagraaf International S.A.
25, avenue du Pailly
1220 Les Avanchets - Geneva (CH)

(54) **Semi-rigid airship**

(57) Semi-rigid dirigible airship (1) with high operational qualities using pressurised air in rigid spheres (6) for ballast and which may be used for civil, military and other purposes and primarily for transporting large dimensional objects.

FIG. 1

EP 1 736 405 A1

## Description

The invention belongs to the field of aeronautics and can be used primarily to build lighter-than-air aircraft, e.g. airships, or dirigibles.

A vacuum airship is currently known. An airship of this type has a gas-tight load-bearing hull, a bow and aft chambers for flight control and airship trim (see Patent of the Fed. Rep. of Germany DE 4009763C2, Application P40097663.3-42. dated 27 March 1990, Class A64A 1/38, B64B 1/106). The two compartments are separated from the airship hull by means of rigid partitions. However, the use of a vacuum requires a high degree of strength in the airship hull structure to prevent its collapse and destruction due to atmospheric pressure. This results in a considerable increase in the own weight of the airship. Because of this, such an airship might be economically unprofitable.

Also known is a Skyship-500 type airship developed by Britain's Airship Industries, Ltd. (see "Foreign Military Review [in Russian]" No. 7, 1963. pp. 57-58). It has a hull with a round cross-section and of ellipsoidal form in plan. Inside the airship hull, there are two ballonets for pressure regulation and longitudinal trim. A disadvantage of this airship design is that it uses tanks with water ballast which limits the useful field of its application, effectively making it impossible to use an airship of this type at sub-zero temperatures as well as in desert conditions.

Also known is a semi-rigid airship consisting of a shell, a keel structure, bow and aft compartments, a middle compartment and rigid gas-tight partitions made from laminated wall elements with internal reinforcing structure (see USSR Patent No. 716520, Class A64A 1/102, 1974) which we used as a prototype. However, an airship of this type has poor controllability in flight as well as trim, since the bow and aft compartments are designed to withstand ram-air flow in flight and not to provide airship trim. The use of loadable ballast effectively limits the application of this type of airship as in the above case. In addition, the use of water ballast without special safety checks when crossing state borders and in international flights may cause some problems with customs and sanitary authorities in connection with the requirements to guarantee the safety of ballast water as well as to prevent potential smuggling.

The proposed invention is directed at solving the problem of raising the efficiency of airship operation by using the ambient medium as ballast, for example, by using the surrounding air as ballast with controlled modification of its physical properties.

The above-described technical task is dealt with by placing a spatial structure of bundles of ballast reservoirs in the bow and aft compartments of the airship. These reservoirs are made in the form of rigid, finned spheres resting on rigid gas-tight partitions while the front sphere and the rear sphere are equidistantly inscribed in the shell contour of the bow and aft of the airship. They are filled with air under pressure.

In all flight regimes, as well as during airship stops and hovering, the air-ballast reservoirs are filled with air under pressure while observing the following condition:

$$P_B = P - P_A$$

where:

   $P_B$ - weight of the air pumped into the ballast reservoirs;
   P - lift capacity of the carrying gas;
   $P_A$ - own weight of the airship in any moment of its flight, stop and hovering.

The use of a gaseous medium (air) as ballast has been previously known (see Russian Federation Patent No. 2093413 C1, Class B64B 1/00, dated 30 July 1991: and USSR Inventor's Certificate No. 687727, Class B64B 1/08, 1974). However, these solutions have a serious defect in common. In each of these cases, the gaseous ballast interacts with the carrying gas transmitting the pressure through a flexible support (Russian Federation Patent No.2093413 Cl) or through an inter-layer diaphragm (Inventor's Certificate No. 687727) which can damage the whole structure even under minor excess pressure. Total forces acting on the shell area due to this excess pressure may reach dozens of metric tons. These stresses can travel to shell attachment points and damage them. That is why it is necessary to eliminate any interaction between the ballast gas and the carrying gas, and a way to do exactly that is suggested in the present invention.

Unlike in analogous and prior art designs, the use of the ambient medium (air) as ballast in the proposed invention results in the appearance of a new advantageous quality - the ability to fly with total compensation of all airship weight losses and weight changes in flight: for example, weight changes due to the consumption of fuel and water, carrying gas leakage, temperature changes and changes in weather conditions. Also, unloading of payload cargo will not necessitate the loading of some additional ballast (water or soil, etc.) anymore.

The principle of increasing ballast to compensate for changes in weight due to fuel consumption has also been previously known (see USA Patent No. 2310 767. Class 244-95, 1937; British Patent No. 2059 898, Class B64B 1/70, 1981; also see Yu.S. Boiko Aeronautics in Inventions, [in Russian], Moscow, "Transport", 1999, pp. 57-62). However, in this case ballasting change will not allow to control and manoeuvre the dirigible, for instance to descend in case of emergency or to ascent, which can be fully done in the suggested invention, as all the ranges of ballasting change include all the changes of dirigible weight from compensation of fuel loss up to compensation of payload in the suggested technical solution. No technical solutions among those known possess such property.

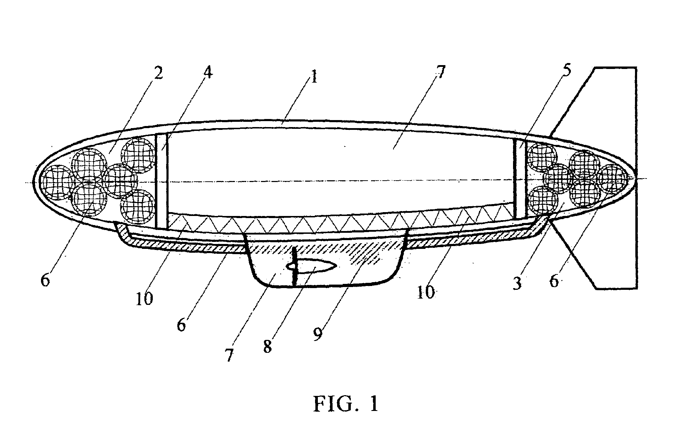

Fig. 1 shows general view of the dirigible, including envelope of the dirigible 1, nose compartment 2 and stem 3 compartments, gas proof walls 4 and 5, ballast capacities 6, airship car 7, engines 8, injection system and air discharge system 9, fin framework 10. Ballast capacities 6, being connected between each other in the single spatial construction, based on the rigid wail 4 and 5.

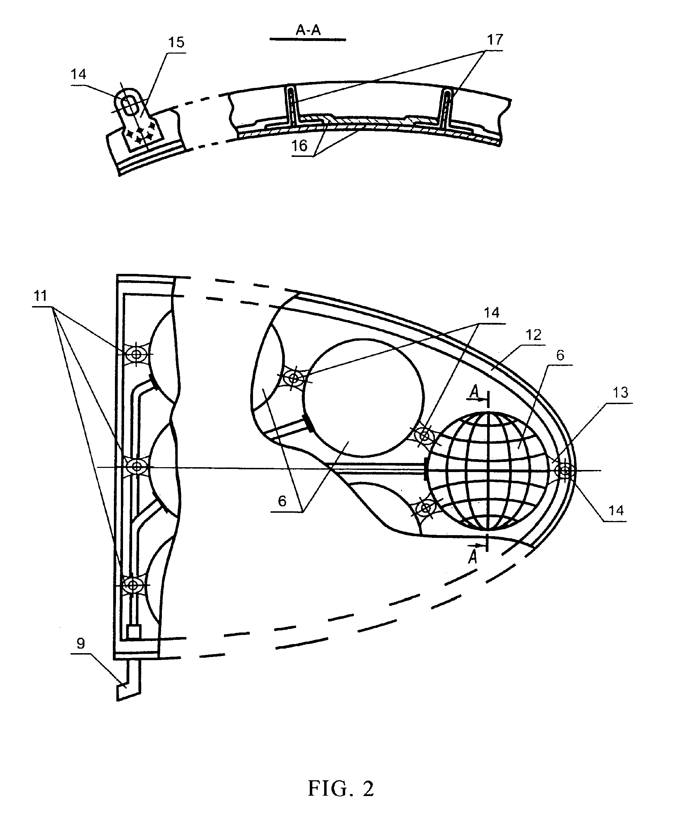

Fig. 2 shows layout of ballast capacities 6, which represent finned spheres, in the dirigible compartment. Spheres 6 are tightly connected with walls 4, 5 joints 11. Between spheres and spheres and power stringer 12, for instance in the joint 13, manufactured joints have compensation clearances 14, which allow to avoid the transmission of load from sphere supercharging 6 to the load carrying structure of the dirigible and exclude in this way its destruction, because without compensation clearances total force acting upon manufactured joints will reach dozens and hundreds tons. Joint lugs 15 are fastened on the exterior fin of the sphere.(see section A-A).

Section A-A shows the construction of finned sphere, covered with layers 16 made out of high strength material, for instance Kevlar with connecting substance which can be epoxy resin. Finns 17, located outside the sphere and covered with layers of Kevlar make specific "parallels and meridians" and create single rigid construction on the surface of the sphere. Finns 17 can be made both out of Kevlar and metal, for instance duralumin.

Similar construction of the sphere allows to create air pressure inside the sphere which is sufficient for creating by all ballast capacities weight necessary for ballasting of dirigible. (with pressure 6 atm. 1m$^3$ of air weight makes 7.2 kg).

During the flight due to the extreme finned spheres (front and back) inscribed equidistantly in the construction of envelope tails, aerodynamic load is transmitted from dynamic pressure through the envelope to the connected spheres and is closed further on the rigid spatial construction made out of walls 4 and 5 and fin framework 10.

Pressurize system and air discharge system 9 contain compressor with drive, receivers, control and measuring units, including computer control system, assigning night program and corresponding pressurize modes and air discharge mode. System 9 can be autonomous, and if necessary can have drive and power selection system for its functioning from carrying engines 8.

The dirigible performs its functions in the following way:

According to the flight program, which supposes loading of some useful load, including fuel, compressed air is discharged from ballast capacities in the process of loading, the weight of compressed air is equal to the received load. Further ascent to the assigned flight altitude is provided by the release of ballast in the form of compressed air with weight equal to the required lift excess. To maintain the flight altitude with fuel, water consumption etc., which results in the reduction of dirigible weight, compressed air is pressurized in the ballast capacities, inflow of compressed air corresponds fuel, water consumption, etc, providing flight stability of the dirigible at the assigned altitude. To descend the dirigible the inflow of compressed air is increased like ballast according to the assigned program, and controlled descend of the dirigible is accomplished. With further unloading of useful load, crew etc. injection of compressed air is made like ballast with weight equal to the useful load, providing stable position of the dirigible at the land surface.

The description of the operation of the suggested dirigible is explained in the examples 1-5.

Example 1, dirigible with useful load is at the land surface: In this case air weight in ballast capacities is equal to the value of lift excess, lifting the dirigible to the required flight altitude.

Example 2, flight of dirigible is at the designed altitude: In this case own weight of dirigible is reduced continuously. To fulfil the condition $P_B = P - P_A$ , it is necessary to inject air in the ballast capacities during the flight 6 in the process of fuel, water consumption, change of flight conditions.

Example 3, dirigible is in the flight without useful load: In this case air weight in ballast capacities is equal to the weight of useful load + continuous air injection in ballast capacities 6, as shown in the example 2.

Example 4, the flight in terms of low temperatures (in winter):
Flying regime can be similar to the examples 1, 2, 3 but air injected in ballast capacities 6 from operating engines is heated supplementary for the compensation of lift excess loss which occurs in the process of carrying gas cooling.

Example 5, dirigible is descending: Depending on the required descent rate air injection is made in the ballast capacities 6 with designed value of air consumption.

The application of the suggested construction comparing with the existed varieties of dirigibles provides the following advantages:

- suggests complete control and effectiveness of dirigible in the desert conditions, low temperatures and change of flight conditions.
- does not require ballast loading from the land surface, thus providing high quality maintenance, allows to carry out flights which are impossible in the known projects of the dirigibles at the account of the new property - controlled change of ballasting in the flight and complete compensation of any weight changes during the flight.

**Claims**

1. Semi-rigid airship consisting of a shell, a keel structure, bow and aft compartments, a middle compartment and rigid gas-tight partitions made from laminated wall elements with an internal reinforcing structure, **characterized by** placing a spatial structure of bundles of ballast reservoirs in the low aft compartments of the airship and by that these reservoirs are made in the form of rigid, finned spheres resting on rigid gas-tight partitions while a front sphere and a rear sphere are equidistantly positioned in the shell contour of the bow and aft of the airship and are filled with pressurized air while observing the following condition:

$$P_B = P - P_A$$

where:

$P_B$ - weight of the air pumped into the ballast reservoirs;
$P$ - lift capacity of the carrying gas;
$P_A$ - own weight of the airship in any moment of its flight, stop and hovering.

FIG. 1

FIG. 2

European Patent Office

**EUROPEAN SEARCH REPORT**

Application Number

EP 05 01 3400

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RU 2 178 370 C1 (MAKAROV VLADIMIR IVANOVICH; AMINOV LEONID ALEKSANDROVICH) 20 January 2002 (2002-01-20) * the whole document * ----- | 1 | B64B1/70 B64B1/38 |
| | | | **TECHNICAL FIELDS SEARCHED (IPC)** |
| | | | B64B |

The present search report has been drawn up for all claims

| Place of search | Date of completion of the search | Examiner |
|---|---|---|
| The Hague | 29 November 2005 | Calvo De No, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

EP 1 736 405 A1

## ANNEX TO THE EUROPEAN SEARCH REPORT
## ON EUROPEAN PATENT APPLICATION NO.

EP 05 01 3400

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2005

| Patent document cited in search report | Publication date | Patent family member(s) | Publication date |
|---|---|---|---|
| RU 2178370 C1 | 20-01-2002 | NONE | |

EPO FORM P0459

For more details about this annex : see Official Journal of the European Patent Office, No. 12/82

8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 4009763 C2
- DE P40097663342
- SU 716520
- RU 2093413 C1
- SU 687727
- US 2310767 A
- GB 2059898 A

### Non-patent literature cited in the description

- *Foreign Military Review [in Russian,* 1963, 57-58
- **YU.S.** Boiko Aeronautics in Inventions. *Transport,* 1999, 57-62